(19) Europäisches Patentamt / European Patent Office / Office européen des brevets

(11) EP 4 258 172 A1

(12) **EUROPEAN PATENT APPLICATION**

(43) Date of publication:
**11.10.2023 Bulletin 2023/41**

(21) Application number: **22197605.3**

(22) Date of filing: **26.09.2022**

(51) International Patent Classification (IPC):
**G06N 3/045** (2023.01)   **G06N 3/092** (2023.01)
**G06N 5/043** (2023.01)

(52) Cooperative Patent Classification (CPC):
**G06N 3/092; G06N 3/045; G06N 5/043**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.04.2022 US 202217713376**

(71) Applicant: **Accenture Global Solutions Limited Dublin 4 (IE)**

(72) Inventors:
• **ROY, Debashish**
  **Corvina, 91724 (US)**
• **KING, Cory**
  **Calgary, T3H 5M4 (CA)**
• **SHAFFER, Brent**
  **San Diego, 92103 (US)**

(74) Representative: **Müller-Boré & Partner Patentanwälte PartG mbB Friedenheimer Brücke 21 80639 München (DE)**

(54) **MANAGING REINFORCEMENT LEARNING AGENTS USING MULTI-CRITERIA GROUP CONSENSUS IN A LOCALIZED MICROGRID CLUSTER**

(57)    A device may receive state data, actions, and rewards associated with a network of RL agents monitoring a microgrid environment, and may model the network of RL agents as a spatiotemporal representation. The device may represent interactions of the RL agents as edge attributes in the spatiotemporal representation, and may determine edge attributes, transmissibility, connectedness, and communication delay for each of the RL agents in the spatiotemporal representation. The device may determine, based on the transmissibility, the connectedness, and the communication delay, localized clusters of the RL agents, and may process the localized clusters, with a first machine learning model, to identify consensus master RL agents. The device may process the consensus master RL agents, with a second machine learning model, to identify a final master RL agent for the network of RL agents, and cause the final master RL agent to control the microgrid environment.

FIG. 1A

## Description

BACKGROUND

A microgrid is a self-sufficient energy system that serves a particular geographic area, such as a college campus, a hospital complex, a business center, a neighborhood, and/or the like. Within a microgrid are one or more kinds of distributed energy sources (e.g., solar panels, wind turbines, combined heat and power, generators, energy storage devices (e.g., batteries), and/or the like) that produce power for the microgrid.

SUMMARY

Some implementations described herein relate to a method. The method may include receiving state data, actions, and rewards associated with a network of reinforcement learning (RL) agents monitoring a microgrid environment, and modeling the network of RL agents as a spatiotemporal representation. The method may include representing interactions of the RL agents as edge attributes in the spatiotemporal representation, and determining, based on the edge attributes, transmissibility, connectedness, and communication delay for each of the RL agents in the spatiotemporal representation. The method may include determining, based on the transmissibility, the connectedness, and the communication delay, localized clusters of the RL agents in the spatiotemporal representation, and processing the localized clusters of the RL agents, with a first machine learning model, to identify consensus master RL agents for the localized clusters of the RL agents. The method may include processing the consensus master RL agents, with a second machine learning model, to identify a final master RL agent for the network of RL agents, and causing the final master RL agent to control the microgrid environment.

Some implementations described herein relate to a device. The device may include one or more memories and one or more processors coupled to the one or more memories. The one or more processors may be configured to receive state data, actions, and rewards associated with a network of RL agents monitoring a microgrid environment, and model the network of RL agents as a spatiotemporal representation. The one or more processors may be configured to represent interactions of the RL agents as edge attributes in the spatiotemporal representation, and determine, based on the edge attributes, transmissibility, connectedness, and communication delay for each of the RL agents in the spatiotemporal representation, where the transmissibility relates to abilities of the RL agents to transmit information to neighboring RL agents, the connectedness relates to connectivity of nodes in the spatiotemporal representation, and the communication delay relates to time taken to transmit information to or receive information from the RL agents. The one or more processors may be configured to determine, based on the transmissibility, the connectedness, and the communication delay, localized clusters of the RL agents in the spatiotemporal representation, and process the localized clusters of the RL agents, with a first machine learning model, to identify consensus master RL agents for the localized clusters of the RL agents. The one or more processors may be configured to process the consensus master RL agents, with a second machine learning model, to identify a final master RL agent for the network of RL agents, and cause the final master RL agent to control the microgrid environment.

Some implementations described herein relate to a non-transitory computer-readable medium that stores a set of instructions for a device. The set of instructions, when executed by one or more processors of the device, may cause the device to receive state data, actions, and rewards associated with a network of RL agents monitoring a microgrid environment, where the state data includes data identifying one or more of a wildfire risk index for the microgrid environment, a wildfire risk index for a geographical area adjacent to the microgrid environment, emergency power coverage for the microgrid environment, a connection status associated with the microgrid environment, an operational mode of the microgrid environment, a power demand forecast for the microgrid environment, or a state of charge of each of one or more batteries associated with the microgrid environment. The set of instructions, when executed by one or more processors of the device, may cause the device to model the network of RL agents as a spatiotemporal representation, and represent interactions of the RL agents as edge attributes in the spatiotemporal representation. The set of instructions, when executed by one or more processors of the device, may cause the device to determine, based on the edge attributes, transmissibility, connectedness, and communication delay for each of the RL agents in the spatiotemporal representation, and determine, based on the transmissibility, the connectedness, and the communication delay, localized clusters of the RL agents in the spatiotemporal representation. The set of instructions, when executed by one or more processors of the device, may cause the device to process the localized clusters of the RL agents, with a first machine learning model, to identify consensus master RL agents for the localized clusters of the RL agents, and process the consensus master RL agents, with a second machine learning model, to identify a final master RL agent for the network of RL agents. The set of instructions, when executed by one or more processors of the device, may cause the device to cause the final master RL agent to control the microgrid environment.

BRIEF DESCRIPTION OF THE DRAWINGS

Figs. 1A-1H are diagrams of an example implementation described herein.

Fig. 2 is a diagram illustrating an example of training and using a machine learning model.

Fig. 3 is a diagram of an example environment in which systems and/or methods described herein may be implemented.

Fig. 4 is a diagram of example components of one or more devices of Fig. 3.

Fig. 5 is a flowchart of an example process for managing reinforcement learning (RL) agents using multi-criteria group consensus in a localized microgrid cluster.

DETAILED DESCRIPTION

The following detailed description of example implementations refers to the accompanying drawings. The same reference numbers in different drawings may identify the same or similar elements.

The past several years have been the warmest years on record, which has led to an increased frequency and intensity of droughts and wildfires. For example, over forty thousand wildfires occurred in 2021 and damaged 4.4 million acres of land. Approximately five billion dollars were spent on federal wildfire response in 2021, representing a large increase in fire suppression costs. Wildfires have become increasingly common during the last few decades. During the summer months in hotter climates, microgrids (e.g., power distribution networks), particularly those near forests, are vulnerable to wildfires. Shapes and strengths of power lines are permanently weakened due to rapid temperature increases caused by wildfires. Wildfires generate extended and widespread microgrid power outages that are much more severe than outages previously accounted for in system reliability assessments. Current techniques for handling power outages caused by wildfires utilize a reliability approach that is unable to handle severe outages in modern power systems.

Therefore, current techniques for handling power outages caused by wildfires consume computing resources (e.g., processing resources, memory resources, communication resources, and/or the like), networking resources, transportation resources, and/or the like associated with dispatching emergency personnel to combat the increased wildfires, failing to prevent wildfires and microgrid power outages caused by wildfires, inefficiently handling the increase in wildfires and microgrid power outages, addressing legal issues associated with safety violations that further increase microgrid power outages, replacing power lines damaged by wildfires, and/or the like.

Some implementations described herein relate to an RL system that manages RL agents using multi-criteria group consensus in a localized microgrid cluster. For example, the RL system may receive state data, actions, and rewards associated with a network of RL agents monitoring a microgrid environment, and may model the network of RL agents as a spatiotemporal representation. The RL system may represent interactions of the RL agents as edge attributes in the spatiotemporal representation, and may determine, based on the edge attributes, transmissibility, connectedness, and communication delay for each of the RL agents in the spatiotemporal representation. The RL system may determine, based on the transmissibility, the connectedness, and the communication delay, localized clusters of the RL agents in the spatiotemporal representation, and may process the localized clusters of the RL agents, with a first machine learning model, to identify consensus master RL agents for the localized clusters of the RL agents. The RL system may process the consensus master RL agents, with a second machine learning model, to identify a final master RL agent for the network of RL agents, and may cause the final master RL agent to control the microgrid environment.

In this way, the RL system manages RL agents using multi-criteria group consensus in a localized microgrid cluster. The RL system may reduce wildfire risk and may increase microgrid power continuity by automating power flow control in areas at high-risk to wildfires, and by implementing an intelligent RL agent-based architecture for faster response using wireless technologies. The RL system may improve microgrid power coverage and continuity while reducing risks associated with wildfires, may mitigate wildfire risks and intensities, and may save lives of microgrid residents and emergency personnel. This, in turn, conserves computing resources, networking resources, transportation resources, and/or the like that would otherwise have been consumed in dispatching emergency personnel to combat the increased wildfires, failing to prevent wildfires and microgrid power outages caused by wildfires, inefficiently handling the increase in wildfires and microgrid power outages, addressing legal issues associated with safety violations that further increase microgrid power outages, replacing power lines damaged by wildfires, and/or the like.

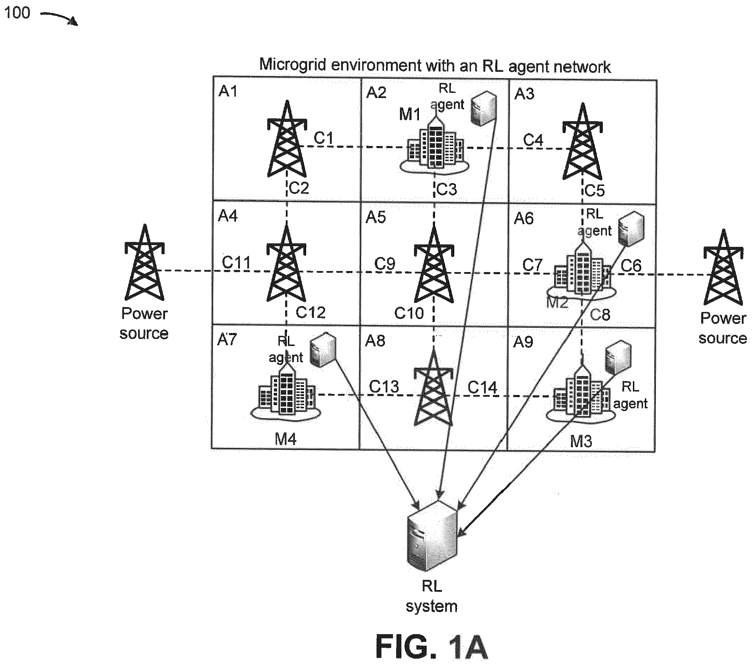

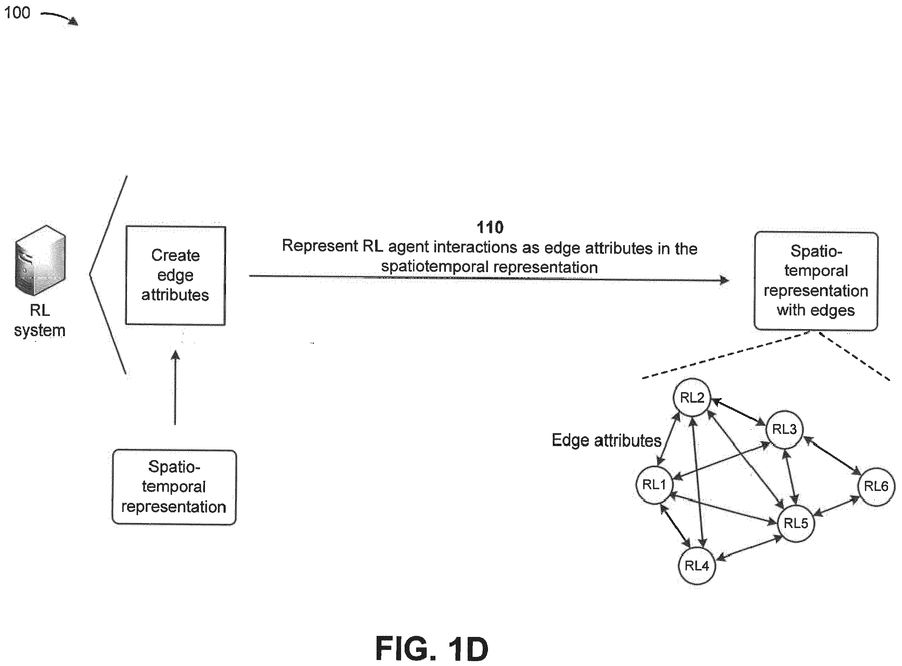

Figs. 1A-1H are diagrams of an example 100 associated with managing RL agents using multi-criteria group consensus in a localized microgrid cluster. As shown in Figs. 1A-1H, example 100 includes an RL system associated with a microgrid environment with an RL agent network. The RL system may include a system that manages RL agents using multi-criteria group consensus in a localized microgrid cluster. Further details of the RL system, the microgrid environment, and the RL agents are provided elsewhere herein.

As shown in Fig. 1A, the microgrid environment may include geographical areas (e.g., geographical area A1 through geographical area A9) with power sources providing power to other power sources and/or microgrids (e.g., microgrid M1, microgrid M2, microgrid M3, and microgrid M4). The power sources may interconnect with the other power sources and/or the microgrids, via connections (e.g., connection C1 through connection C14), so that power may be provided to the other power sources and/or the microgrids. The power sources may include sources that generate electric power via solar energy, fossil fuel energy, batteries, and/or the like. The microgrids may include consumers of the electric power generated by the power sources. For example, the microgrids may include buildings, electric vehicles, houses, and/or the like.

Each of the RL agents may be associated with a microgrid and may communicate with the RL system. Each RL agent may be an independent learner with respect to a corresponding microgrid and may not consider whether actions performed for the corresponding microgrid impact microgrids associated with other RL agents. Each RL agent may not have insights into the microgrids associated with the other RL agents and may make decisions based solely on knowledge of the corresponding microgrid. However, actions of the RL agents should achieve a global objective and consensus for all of the microgrids. For example, during a natural calamity or power shut off, frequent changes in electrical power or reconfiguration of the microgrid environment and the RL agent network may occur, which may disconnect one or more RL agents from the RL agent network or may limit connectivity of one or more RL agents with the RL agent network.

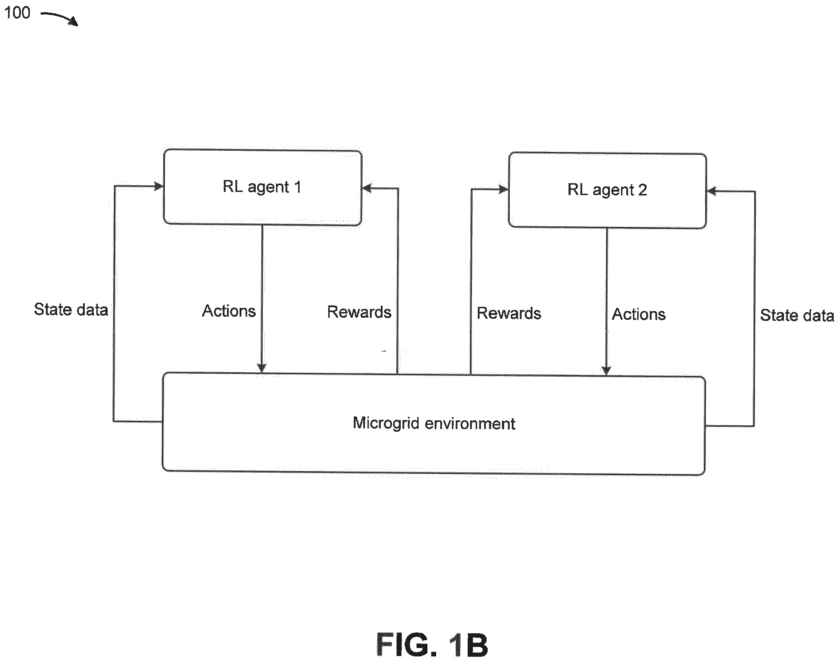

Fig. 1B depicts interactions of two of the RL agents (e.g., RL agent 1 and RL agent 2) of the RL agent network with the microgrid environment. As shown, the RL agents may receive state data from the microgrid environment. The RL agents may determine actions to perform based on the state data, and may cause the actions to be implemented in the microgrid environment. The microgrid may generate rewards based on the actions implemented by the RL agents, and may provide data identifying the rewards to the RL agents.

The state data may include data identifying a wildfire risk index for the microgrid environment, a wildfire risk index for a geographical area adjacent to the microgrid environment, emergency power coverage for the microgrid environment, a connection status associated with the microgrid environment, an operational mode of the microgrid environment, a power demand forecast for the microgrid environment, a state of charge of each of one or more batteries associated with the microgrid environment, and/or the like. The wildfire risk index ($WRI_{A1}$) for the microgrid environment may be determined based on a function of wildfire likelihood ($L_{A1}, L_{Aj}$), exposure ($EX_{A1}, Ex_{Aj}$), and effects ($Ef_{A1}, Ef_{Aj}$) for the microgrid environment ($A1$) and a geographical area adjacent to the microgrid environment ($Aj$), as follows: $WRI_{A1} = f(L_{A1}, Ex_{A1}, Ef_{A1}, L_{Aj}, Ex_{Aj}, Ef_{Aj})$.

The actions may include operating the microgrid environment in a fully grid-connected operational mode, operating the microgrid environment in a partially grid-connected operational mode, operating the microgrid environment in a partially islanded operational mode, operating the microgrid environment in a fully islanded operational mode, and/or the like.

The rewards (R) may be determined based on energy coverage (EC) for the microgrid environment, a wildfire risk index (WRI) for the microgrid environment, emergency power coverage (EPC) for the microgrid environment, a state of charge (SOC) of each of one or more batteries (s) associated with the microgrid environment, and/or the like, over time (e.g., t, t+1, etc.) as follows: $R(s_t, s_{t+1}) = f(f(EC_t, EC_{t+1}), f(WRI_t, WRI_{t+1}), f(EPC_t, EPC_{t+1}), f(SOC_t, SOC_{t+1}))$. In one example, a reward for a battery may be one (1) when the state of charge of the battery is greater than an upper threshold (e.g., 90%), may be negative one (-1) when the state of charge of the battery is less than a lower threshold (e.g., 20%), and may be determined based on an equation (e.g., 0.1 × SOC) when the state of charge of the battery is greater than or equal to the lower threshold and less than or equal to the upper threshold.

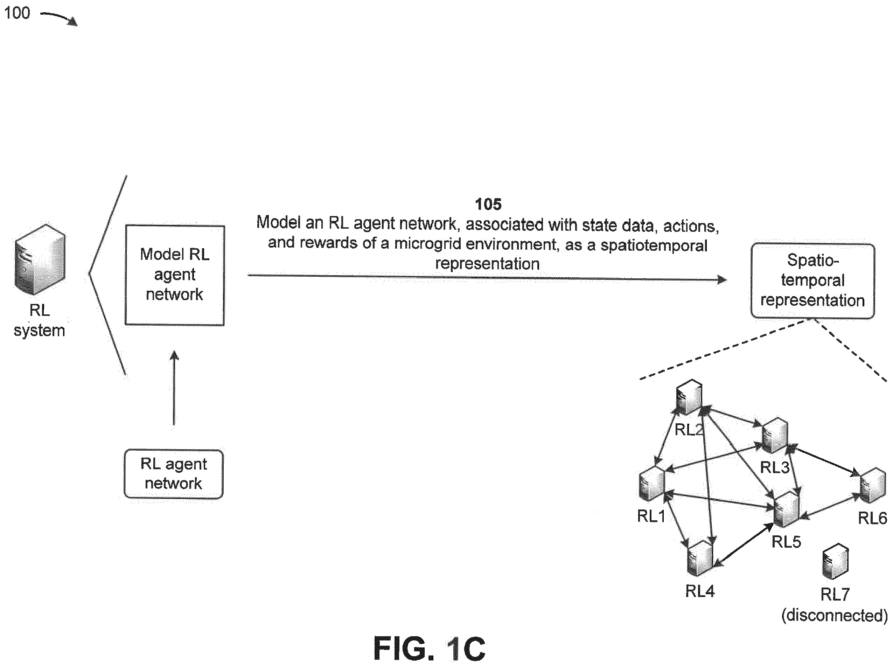

As shown in Fig. 1C, and by reference number 105, the RL system may model the RL agent network, associated with the state data, the actions, and the rewards of the microgrid environment, as a spatiotemporal representation. For example, the RL system may receive data identifying the RL agent network, the state data, the actions, and the rewards from the RL agents and/or from the microgrid environment. The RL agents of the RL agent network may interact with each other in space and time. During a wildfire, composition of the RL agent network may change frequently (e.g., due to RL agents becoming disconnected due to power outages caused by the wildfire), which may lead to a spatiotemporal composition. For example, if the microgrid environment includes a topology (M) with a quantity (n) of groups (e.g., geographical areas $M_1, M_2, M_3, M_4, ..., M_n$) and a variable (A) represents a quantity of RL agents deployed in the microgrid environment, calculated as follows:

$$A = \bigcup_{k=1}^{p} A_k$$

. The spatiotemporal representation of the RL agent network may include spatiotemporal graphs of the RL agent network at different points in time.

For example, as further shown in Fig. 1C, the spatiotemporal representation may include a spatiotemporal graph that includes a first RL agent (RL1), a second RL agent (RL2), a third RL agent (RL3), a fourth RL agent (RL4), a fifth RL agent (RL5), and a sixth RL agent (RL6), and interactions between the aforementioned RL agents. A seventh RL agent (RL7) may be disconnected from the spatiotemporal graph since the seventh RL agent fails to interact with the other RL agents (e.g., due to a power outage caused by a wildfire). A spatiotemporal graph may include static structures and time-varying features, and such information in a spatiotemporal graph may require a neural network model that can process the time-varying features of the spatiotemporal graph.

As shown in Fig. ID, and by reference number 110, the RL system may represent RL agent interactions as edge attributes in the spatiotemporal representation. For example, each RL agent may initiate frequent and repetitive fixed or ad hoc communications (e.g., interactions) with neighboring RL agents. The RL system may record the RL agent interactions as edge attributes in a distributed manner between connected RL agents. The RL agent interactions may include checking availabilities of other RL agents, checking response times of other RL agents, understanding power flow and power capacity of the microgrid environment, and/or the like. As further shown in Fig. ID, the RL system may represent the first RL agent through the sixth RL agent as nodes in the spatiotemporal representation (e.g., the spatiotemporal graph), and may represent the RL agent interactions as edges (e.g., edge attributes) connecting the nodes of the spatiotemporal graph.

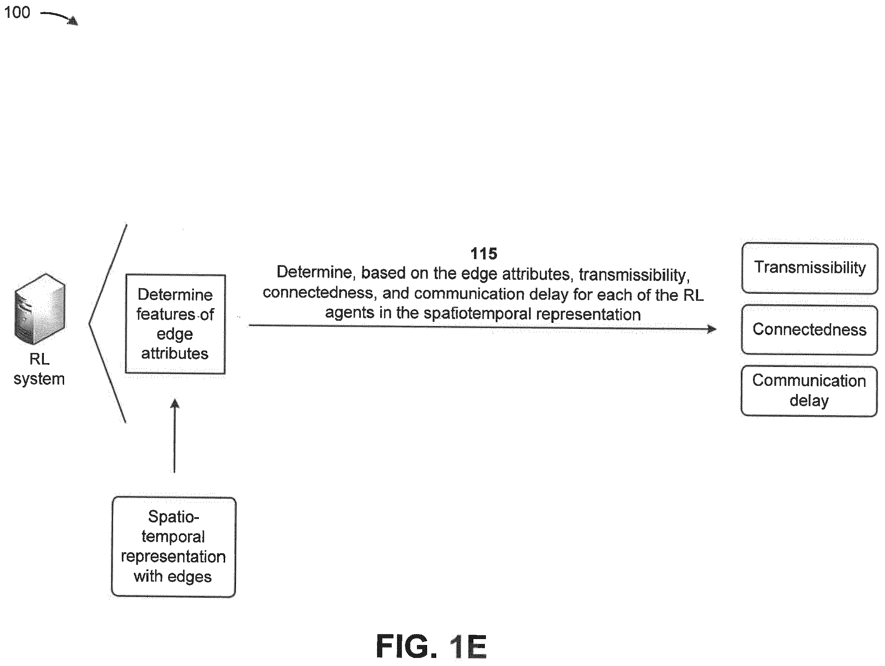

As shown in Fig. 1E, and by reference number 115, the RL system may determine, based on the edge attributes, transmissibility, connectedness, and communication delay for each of the RL agents in the spatiotemporal representation. For example, the RL system may group the edge attributes into a transmissibility group, a connectedness group, or a communication delay group based on the RL agent interactions corresponding to the edge attributes. The transmissibility may relate to abilities of the RL agents to transmit information to neighboring RL agents. Thus, if an RL agent interaction relates to an ability of an RL agent to transmit information to neighboring RL agents, the RL system may group an edge attribute, corresponding to the RL agent interaction, into the transmissibility group. The connectedness may relate to connectivity of nodes in the spatiotemporal representation (e.g., connectivity of the RL agents with neighboring RL agents). Thus, if an RL agent interaction relates to connectivity of an RL agent with a neighboring RL agent, the RL system may group an edge attribute, corresponding to the RL agent interaction, into the connectedness group. The communication delay may relate to times taken to transmit information to or receive information from the RL agents. Thus, if an RL agent interaction relates to time taken to transmit information to or receive information from an RL agent, the RL system may group an edge attribute, corresponding to the RL agent interaction, into the communication delay group. In some implementations, the RL system may determine the transmissibility, the connectedness, and the communication delay for each of the RL agents in the spatiotemporal representation for each time step.

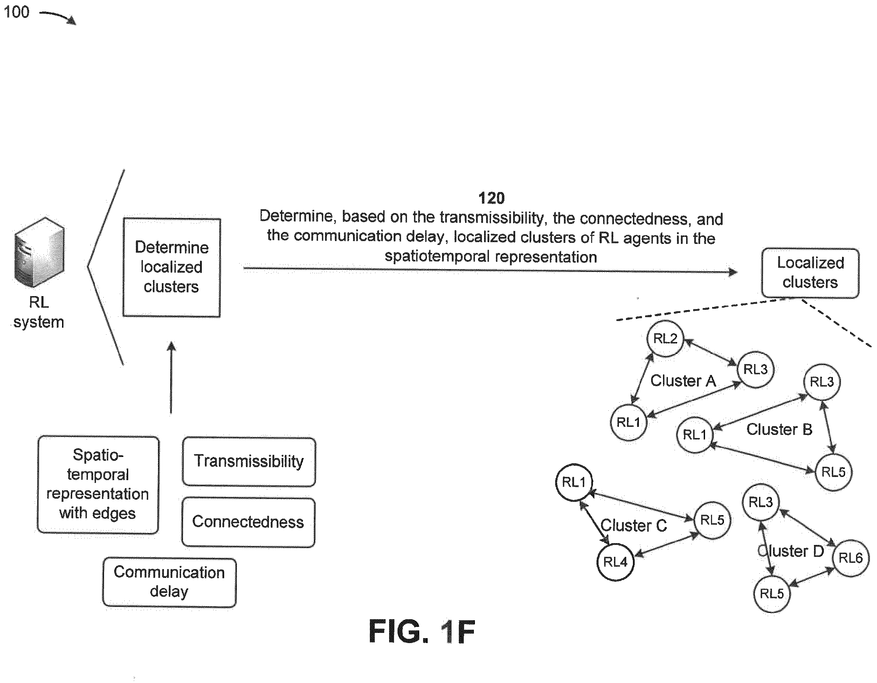

As shown in Fig. 1F, and by reference number 120, the RL system may determine, based on the transmissibility, the connectedness, and the communication delay, localized clusters of RL agents in the spatiotemporal representation. For example, the RL system may analyze the transmissibility, the connectedness, and the communication delay associated with the RL agents in the spatiotemporal representation, and may determine classifications for the RL agents based on analyzing the transmissibility, the connectedness, and the communication delay associated with the RL agents. The RL system may group (e.g., cluster) two or more of the RL agents within a localized cluster based on a threshold degree of similarity associated with the classifications of the RL agents.

For example, as further shown in Fig. 1F, the RL system may determine that the classifications for the first RL agent, the second RL agent, and the third RL agent satisfy a threshold degree of similarity, and may group the first RL agent, the second RL agent, and the third RL agent in a first localized cluster (e.g., localized cluster A). The RL system may determine that the classifications for the first RL agent, the third RL agent, and the fifth RL agent satisfy a threshold degree of similarity, and may group the first RL agent, the third RL agent, and the fifth RL agent in a second localized cluster (e.g., localized cluster B). The RL system may determine that the classifications for the first RL agent, the fourth RL agent, and the fifth RL agent satisfy a threshold degree of similarity, and may group the first RL agent, the fourth RL agent, and the fifth RL agent in a third localized cluster (e.g., localized cluster C). The RL system may determine that the classifications for the third RL agent, the fifth RL agent, and the sixth RL agent satisfy a threshold degree of similarity, and may group the third RL agent, the fifth RL agent, and the sixth RL agent in a fourth localized cluster (e.g., localized cluster D).

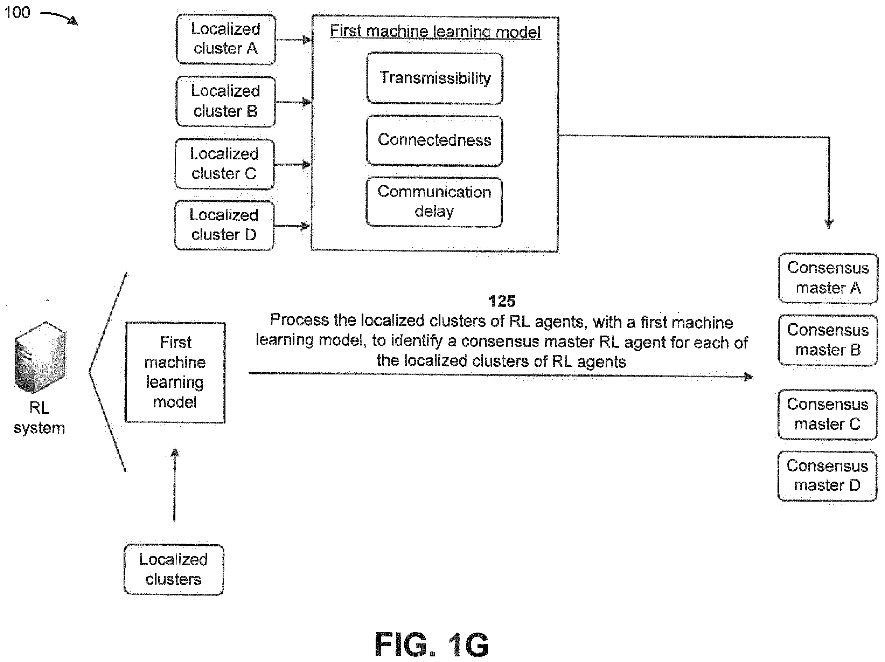

As shown in Fig. 1G, and by reference number 125, the RL system may process the localized clusters of RL agents, with a first machine learning model, to identify a consensus master RL agent for each of the localized clusters of RL agents. For example, the first machine learning model may include a multi-criteria consensus machine learning model. In some implementations, when processing the localized clusters of the RL agents, with the first machine learning model, to identify the consensus master RL agents, the RL system may utilize the first machine learning model to process the transmissibility, the connectedness, and the communication delay, associated with the localized clusters of the RL agents, to identify the consensus master RL agents. Each of the RL agents, identified as a consensus master RL agent for each of the localized clusters, may satisfy a transmissibility threshold, may satisfy a connectedness threshold, may be associated with minimum communication delay, and/or the like.

For example, as further shown in Fig. 1G, the first machine learning model may receive the first localized cluster (e.g., localized cluster A), the second localized cluster (e.g., localized cluster B), the third localized cluster (e.g., localized cluster C), and the fourth localized cluster (e.g., localized cluster D). The first machine learning model may process the transmissibility, the connectedness, and the communication delay, associated with the first localized cluster, the second localized cluster, the third localized cluster, and the fourth localized cluster, to identify a first consensus master RL agent (e.g., consensus master A) for the first localized cluster, a second consensus master RL agent (e.g., consensus master B) for the second localized cluster, a third consensus master RL agent (e.g., consensus master C) for the third localized cluster, and a fourth consensus master RL agent (e.g., consensus master D) for the fourth localized cluster.

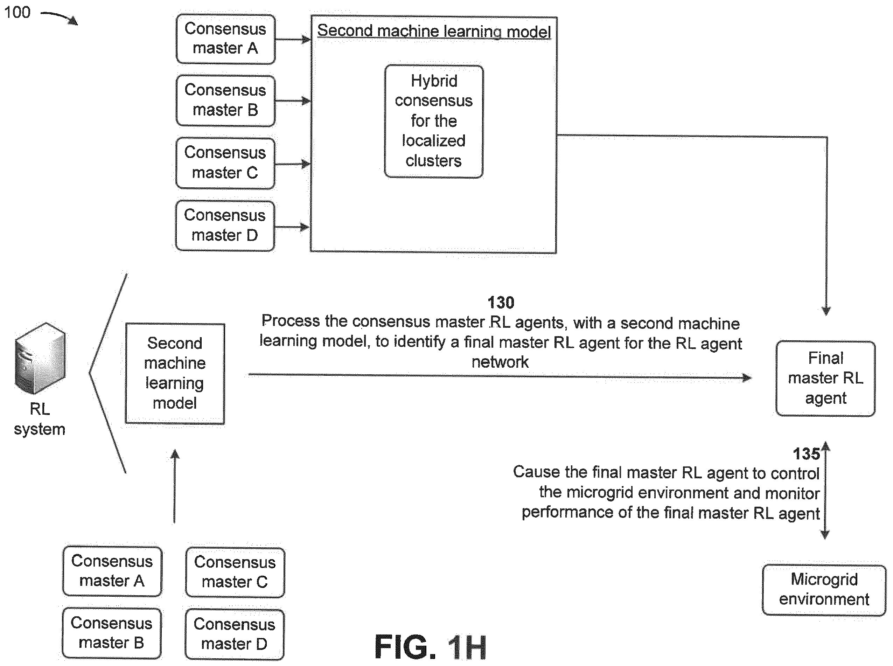

As shown in Fig. 1H, and by reference number 130, the RL system may process the consensus master RL agents, with a second machine learning model, to identify a final master RL agent for the RL agent network. In some implementations, the second machine learning model is a hybrid consensus machine learning model. In some implementations, the first machine learning model and the second machine learning model form a deep neural network model. The RL system may utilize the second machine learning model to sequentially form a series of virtually-reduced cluster sequences, and may identify the final master RL agent for the RL agent network based on the virtually-reduced cluster sequences.

For example, as further shown in Fig. 1H, the second machine learning model may receive the first consensus master RL agent (e.g., consensus master A), the second consensus master RL agent (e.g., consensus master B), the third consensus master RL agent (e.g., consensus master C), and the fourth consensus master RL agent (e.g., consensus master D). The second machine learning model may process the first consensus master RL agent, the second consensus master RL agent, the third consensus master RL agent, and the fourth consensus master RL agent to sequentially form the series of virtually-reduced cluster sequences and to identify the final master RL agent for the RL agent network.

As further shown in Fig. 1H, and by reference number 135, the RL system may cause the final master RL agent to control the microgrid environment and may monitor performance of the final master RL agent. For example, when causing the final master RL agent to control the microgrid environment, the RL system may cause the final master RL agent to receive and process new state data associated with the microgrid environment and to determine new actions based on the new state data. The RL system may cause the final master RL to implement the new actions in the microgrid environment, and may cause the final master RL agent to receive new rewards from the microgrid environment based on the new actions.

In some implementations, the RL system may monitor a performance of the final master RL agent in controlling the microgrid environment, and may select another final master RL agent based on the performance of the final master RL agent (e.g., when the performance fails to satisfy a threshold of performance). Alternatively, the RL system may continue to cause the final master RL agent to control the microgrid environment based on the performance of the final master RL agent (e.g., when the performance satisfies the threshold of performance).

In some implementations, when monitoring the performance of the final master RL agent, the RL system may monitor energy coverage (e.g., time windows where the RL agent network provided zero power) provided by the final master RL agent to the microgrid environment, may monitor average emergency power coverage (e.g., providing power needs for emergency services) provided by the final RL agent to the microgrid environment, may monitor an average reduction in a wildfire risk index provided by the final RL agent to the microgrid environment, and/or the like.

In this way, the RL system manages RL agents using multi-criteria group consensus in a localized microgrid cluster. The RL system may reduce wildfire risk and may increase microgrid power continuity by automating power flow control in areas at high-risk to wildfires, and by implementing an intelligent RL agent-based architecture for faster response using wireless technologies. The RL system may improve microgrid power coverage and continuity while reducing risks associated with wildfires, may mitigate wildfire risks and intensities, and may save lives of microgrid residents and emergency personnel. This, in turn, conserves computing resources, networking resources, transportation resources, and/or the like that would otherwise have been consumed in dispatching emergency personnel to combat the increased wildfires, failing to prevent wildfires and microgrid power outages caused by wildfires, inefficiently handling the increase in wildfires and microgrid power outages, addressing legal issues associated with safety violations that further increase microgrid power outages, replacing power lines damaged by wildfires, and/or the like.

As indicated above, Figs. 1A-1H are provided as an example. Other examples may differ from what is described with regard to Figs. 1A-1H. The number and arrangement of devices shown in Figs. 1A-1H are provided as an example. In practice, there may be additional devices, fewer devices, different devices, or differently arranged devices than those shown in Figs. 1A-1H. Furthermore, two or more devices shown in Figs. 1A-1H may be implemented within a single device, or a single device shown in Figs. 1A-1H may be implemented as multiple, distributed devices. Additionally, or alternatively, a set of devices (e.g., one or more devices) shown in Figs. 1A-1H may perform one or more functions described as being performed by another set of devices shown in Figs. 1A-1H.

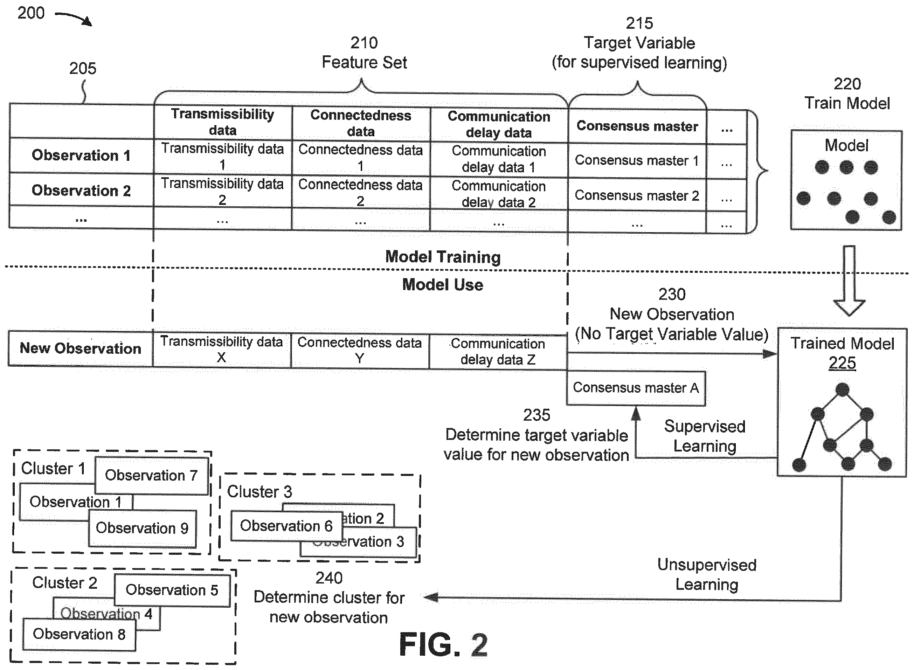

Fig. 2 is a diagram illustrating an example 200 of training and using a machine learning model for managing RL agents using multi-criteria group consensus in a localized microgrid cluster. The machine learning model training and usage described herein may be performed using a machine learning system. The machine learning system may include or may be included in a computing device, a server, a cloud computing environment, and/or the like, such as the RL system described in more detail elsewhere herein.

As shown by reference number 205, a machine learning model may be trained using a set of observations. The set of observations may be obtained from historical data, such as data gathered during one or more processes described herein. In some implementations, the machine learning system may receive the set of observations (e.g., as input) from the RL system, as described elsewhere herein.

As shown by reference number 210, the set of observations includes a feature set. The feature set may include a set of variables, and a variable may be referred to as a feature. A specific observation may include a set of variable values (or feature values) corresponding to the set of variables. In some implementations, the machine learning system may determine variables for a set of observations and/or variable values for a specific observation based on input received from the RL system. For example, the machine learning system may identify a feature set (e.g., one or more features and/or feature values) by extracting the feature set from structured data, by performing natural language processing to extract the feature set from unstructured data, by receiving input from an operator, and/or the like.

As an example, a feature set for a set of observations may include a first feature of transmissibility data, a second feature of connectedness data, a third feature of communication delay data, and so on. As shown, for a first observation, the first feature may have a value of transmissibility data 1, the second feature may have a value of connectedness data 1, the third feature may have a value of communication delay data 1, and so on. These features and feature values are provided as examples and may differ in other examples.

As shown by reference number 215, the set of observations may be associated with a target variable. The target variable may represent a variable having a numeric value, may represent a variable having a numeric value that falls within a range of values or has some discrete possible values, may represent a variable that is selectable from one of multiple options (e.g., one of multiple classes, classifications, labels, and/or the like), may represent a variable having a Boolean value, and/or the like. A target variable may be associated with a target variable value, and a target variable value may be specific to an observation. In example 200, the target variable may be a consensus master and may include a value of consensus master 1 for the first observation.

The target variable may represent a value that a machine learning model is being trained to predict, and the feature set may represent the variables that are input to a trained machine learning model to predict a value for the target variable. The set of observations may include target variable values so that the machine learning model can be trained to recognize patterns in the feature set that lead to a target variable value. A machine learning model that is trained to predict a target variable value may be referred to as a supervised learning model.

In some implementations, the machine learning model may be trained on a set of observations that do not include a target variable. This may be referred to as an unsupervised learning model. In this case, the machine learning model may learn patterns from the set of observations without labeling or supervision, and may provide output that indicates such patterns, such as by using clustering and/or association to identify related groups of items within the set of observations.

As shown by reference number 220, the machine learning system may train a machine learning model using the set of observations and using one or more machine learning algorithms, such as a regression algorithm, a decision tree algorithm, a neural network algorithm, a k-nearest neighbor algorithm, a support vector machine algorithm, and/or the like. After training, the machine learning system may store the machine learning model as a trained machine learning model 225 to be used to analyze new observations.

As shown by reference number 230, the machine learning system may apply the trained machine learning model 225 to a new observation, such as by receiving a new observation and inputting the new observation to the trained machine learning model 225. As shown, the new observation may include a first feature of transmissibility data X, a second feature of connectedness data Y, a third feature of communication delay data Z, and so on, as an example. The machine learning system may apply the trained machine learning model 225 to the new observation to generate an output (e.g., a result). The type of output may depend on the type of machine learning model and/or the type of machine learning task being performed. For example, the output may include a predicted value of a target variable, such as when supervised learning is employed. Additionally, or alternatively, the output may include information that identifies a cluster to which the new observation belongs, information that indicates a degree of similarity between the new observation and one or more other observations, and/or the like, such as when unsupervised learning is employed.

As an example, the trained machine learning model 225 may predict a value of consensus master A for the target variable of the consensus master for the new observation, as shown by reference number 235. Based on this prediction, the machine learning system may provide a first recommendation, may provide output for determination of a first recommendation, may perform a first automated action, may cause a first automated action to be performed (e.g., by instructing another device to perform the automated action), and/or the like.

In some implementations, the trained machine learning model 225 may classify (e.g., cluster) the new observation in a cluster, as shown by reference number 240. The observations within a cluster may have a threshold degree of similarity. As an example, if the machine learning system classifies the new observation in a first cluster (e.g., a transmissibility data cluster), then the machine learning system may provide a first recommendation. Additionally, or alternatively, the machine learning system may perform a first automated action and/or may cause a first automated action to be performed (e.g., by instructing another device to perform the automated action) based on classifying the new observation in the first cluster.

As another example, if the machine learning system were to classify the new observation in a second cluster (e.g., a connectedness data cluster), then the machine learning system may provide a second (e.g., different) recommendation and/or may perform or cause performance of a second (e.g., different) automated action.

In some implementations, the recommendation and/or the automated action associated with the new observation may be based on a target variable value having a particular label (e.g., classification, categorization, and/or the like), may be based on whether a target variable value satisfies one or more thresholds (e.g., whether the target variable value is greater than a threshold, is less than a threshold, is equal to a threshold, falls within a range of threshold values, and/or the like), may be based on a cluster in which the new observation is classified, and/or the like.

In this way, the machine learning system may apply a rigorous and automated process to manage RL agents using multi-criteria group consensus in a localized microgrid cluster. The machine learning system enables recognition and/or identification of tens, hundreds, thousands, or millions of features and/or feature values for tens, hundreds, thousands, or millions of observations, thereby increasing accuracy and consistency and reducing delay associated with managing RL agents using multi-criteria group consensus in a localized microgrid cluster relative to requiring computing resources to be allocated for tens, hundreds, or thousands of operators to manually manage RL agents using multi-criteria group consensus in a localized microgrid cluster.

As indicated above, Fig. 2 is provided as an example. Other examples may differ from what is described in connection with Fig. 2.

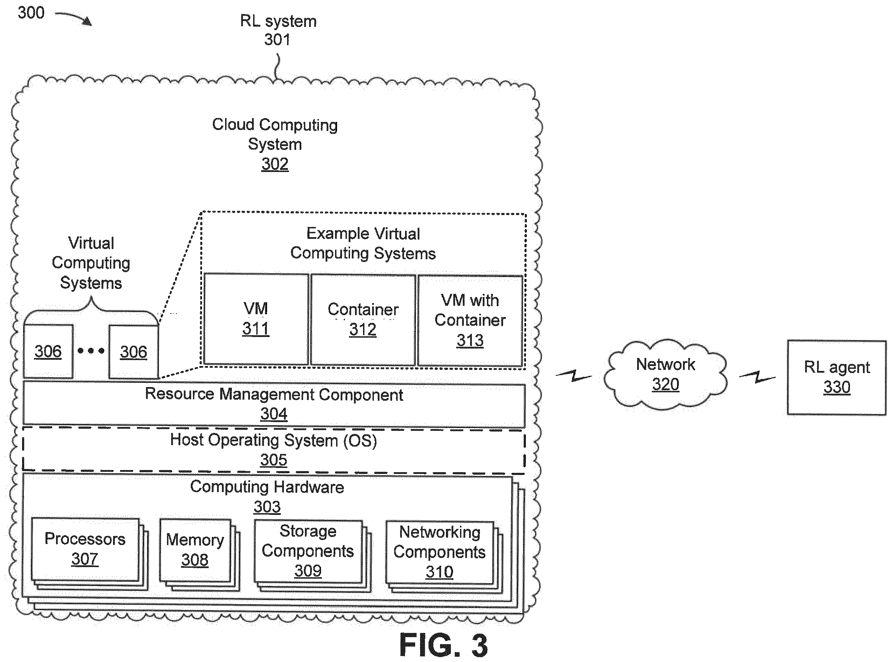

Fig. 3 is a diagram of an example environment 300 in which systems and/or methods described herein may be implemented. As shown in Fig. 3, the environment 300 may include an RL system 301, which may include one or more elements of and/or may execute within a cloud computing system 302. The cloud computing system 302 may include one or more elements 303-313, as described in more detail below. As further shown in Fig. 3, the environment 300 may include a network 320 and/or an RL agent 330. Devices and/or elements of the environment 300 may interconnect via wired connections and/or wireless connections.

The cloud computing system 302 includes computing hardware 303, a resource management component 304, a host operating system (OS) 305, and/or one or more virtual computing systems 306. The resource management component 304 may perform virtualization (e.g., abstraction) of the computing hardware 303 to create the one or more virtual computing systems 306. Using virtualization, the resource management component 304 enables a single computing device (e.g., a computer, a server, and/or the like) to operate like multiple computing devices, such as by creating multiple isolated virtual computing systems 306 from the computing hardware 303 of the single computing device. In this way, the computing hardware 303 can operate more efficiently, with lower power consumption, higher reliability, higher availability, higher utilization, greater flexibility, and lower cost than using separate computing devices.

The computing hardware 303 includes hardware and corresponding resources from one or more computing devices. For example, the computing hardware 303 may include hardware from a single computing device (e.g., a single server) or from multiple computing devices (e.g., multiple servers), such as multiple computing devices in one or more data centers. As shown, the computing hardware 303 may include one or more processors 307, one or more memories 308, one or more storage components 309, and/or one or more networking components 310. Examples of a processor, a memory, a storage component, and a networking component (e.g., a communication component) are described elsewhere herein.

The resource management component 304 includes a virtualization application (e.g., executing on hardware, such as the computing hardware 303) capable of virtualizing the computing hardware 303 to start, stop, and/or manage the one or more virtual computing systems 306. For example, the resource management component 304 may include a hypervisor (e.g., a bare-metal or Type 1 hypervisor, a hosted or Type 2 hypervisor, and/or the like) or a virtual machine monitor, such as when the virtual computing systems 306 are virtual machines 311. Additionally, or alternatively, the resource management component 304 may include a container manager, such as when the virtual computing systems 306 are containers 312. In some implementations, the resource management component 304 executes within and/or in coordination with a host operating system 305.

A virtual computing system 306 includes a virtual environment that enables cloud-based execution of operations and/or processes described herein using computing hardware 303. As shown, a virtual computing system 306 may include a virtual machine 311, a container 312, a hybrid environment 313 that includes a virtual machine and a container, and/or the like. A virtual computing system 306 may execute one or more applications using a file system that includes binary files, software libraries, and/or other resources required to execute applications on a guest operating system (e.g., within the virtual computing system 306) or the host operating system 305.

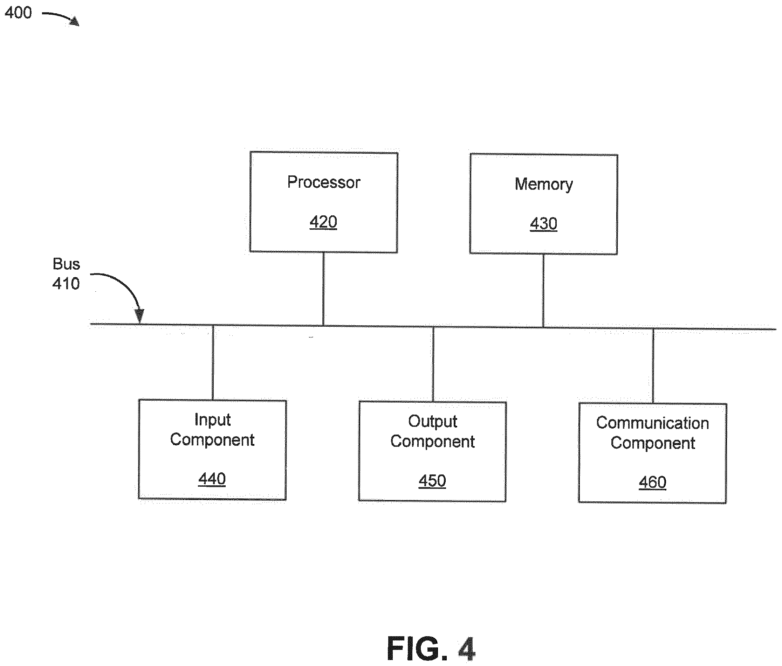

Although the RL system 301 may include one or more elements 303-313 of the cloud computing system 302, may execute within the cloud computing system 302, and/or may be hosted within the cloud computing system 302, in some implementations, the RL system 301 may not be cloud-based (e.g., may be implemented outside of a cloud computing system) or may be partially cloud-based. For example, the RL system 301 may include one or more devices that are not part of the cloud computing system 302, such as device 400 of Fig. 4, which may include a standalone server or another type of computing device. The RL system 301 may perform one or more operations and/or processes described in more detail elsewhere herein.

The network 320 includes one or more wired and/or wireless networks. For example, the network 320 may include a cellular network, a public land mobile network (PLMN), a local area network (LAN), a wide area network (WAN), a private network, the Internet, and/or the like, and/or a combination of these or other types of networks. The network 320 enables communication among the devices of the environment 300.

The RL agent 330 includes one or more devices capable of receiving, generating, storing, processing, and/or providing information, as described elsewhere herein. The RL agent 330 may include a communication device and/or a computing device. For example, the RL agent 330 may include a wireless communication device, a mobile phone, a user equipment, a laptop computer, a tablet computer, a desktop computer, a gaming console, a set-top box, a wearable communication device (e.g., a smart wristwatch, a pair of smart eyeglasses, a head mounted display, or a virtual reality headset), or a similar type of device. In another example, the RL agent 330 may include a server, such as an application server, a client server, a web server, a database server, a host server, a proxy server, a virtual server (e.g., executing on computing hardware), or a server in a cloud computing system.

The number and arrangement of devices and networks shown in Fig. 3 are provided as an example. In practice, there may be additional devices and/or networks, fewer devices and/or networks, different devices and/or networks, or differently arranged devices and/or networks than those shown in Fig. 3. Furthermore, two or more devices shown in Fig. 3 may be implemented within a single device, or a single device shown in Fig. 3 may be implemented as multiple, distributed devices. Additionally, or alternatively, a set of devices (e.g., one or more devices) of the environment 300 may perform one or more functions described as being performed by another set of devices of the environment 300.

Fig. 4 is a diagram of example components of a device 400, which may correspond to the RL system 301 and/or the RL agent 330. In some implementations, the RL system 301 and/or the RL agent 330 may include one or more devices 400 and/or one or more components of the device 400. As shown in Fig. 4, the device 400 may include a bus 410, a processor 420, a memory 430, an input component 440, an output component 450, and a communication component 460.

The bus 410 includes a component that enables wired and/or wireless communication among the components of device 400. The processor 420 includes a central processing unit, a graphics processing unit, a microprocessor, a controller, a microcontroller, a digital signal processor, a field-programmable gate array, an application-specific integrated circuit, and/or another type of processing component. The processor 420 is implemented in hardware, firmware, or a combination of hardware and software. In some implementations, the processor 420 includes one or more processors capable of being programmed to perform a function. The memory 430 includes a random-access memory, a read only memory, and/or another type of memory (e.g., a flash memory, a magnetic memory, and/or an optical memory).

The input component 440 enables the device 400 to receive input, such as user input and/or sensed inputs. For example, the input component 440 may include a touch screen, a keyboard, a keypad, a mouse, a button, a microphone, a switch, a sensor, a global positioning system component, an accelerometer, a gyroscope, an actuator, and/or the like. The output component 450 enables the device 400 to provide output, such as via a display, a speaker, and/or one or more light-emitting diodes. The communication component 460 enables the device 400 to communicate with other devices, such as via a wired connection and/or a wireless connection. For example, the communication component 460 may include a receiver, a transmitter, a transceiver, a modem, a network interface card, an antenna, and/or the like.

The device 400 may perform one or more processes described herein. For example, a non-transitory computer-readable medium (e.g., the memory 430) may store a set of instructions (e.g., one or more instructions, code, software code, program code, and/or the like) for execution by the processor 420. The processor 420 may execute the set of instructions to perform one or more processes described herein. In some implementations, execution of the set of instructions, by one or more processors 420, causes the one or more processors 420 and/or the device 400 to perform one or more processes described herein. In some implementations, hardwired circuitry may be used instead of or in combination with the instructions to perform one or more processes described herein. Thus, implementations described herein are not limited to any specific combination of hardware circuitry and software.

The number and arrangement of components shown in Fig. 4 are provided as an example. The device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

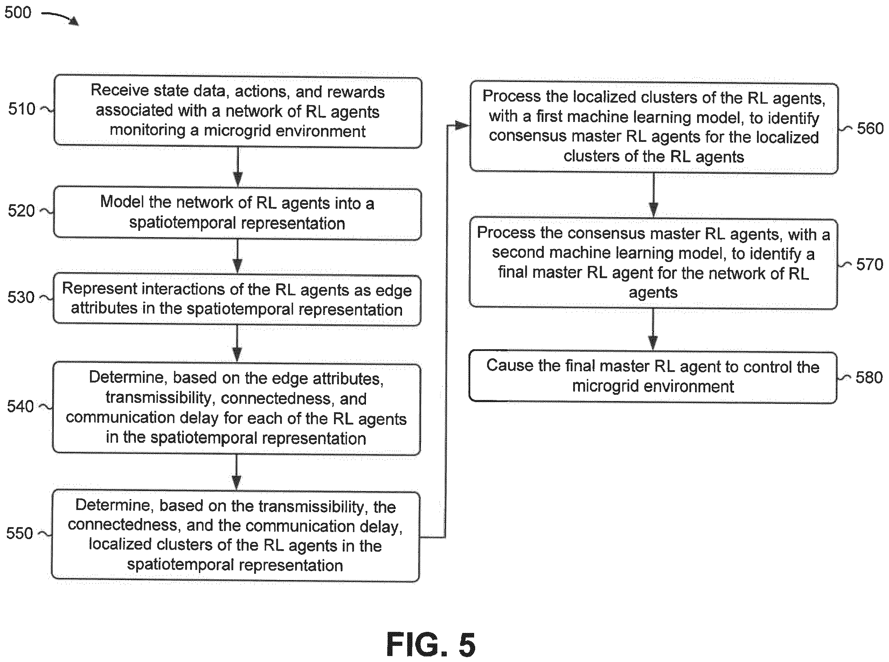

Fig. 5 is a flowchart of an example process 500 for managing RL agents using multi-criteria group consensus in a localized microgrid cluster ls. In some implementations, one or more process blocks of Fig. 5 may be performed by a device (e.g., the RL system 301). In some implementations, one or more process blocks of Fig. 5 may be performed by another device or a group of devices separate from or including the device, such as an RL agent (e.g., the RL agent 330). Additionally, or alternatively, one or more process blocks of Fig. 5 may be performed by one or more components of the device 400, such as the processor 420, the memory 430, the input component 440, the output component 450, and/or the communication component 460.

As shown in Fig. 5, process 500 may include receiving state data, actions, and rewards associated with a network of RL agents monitoring a microgrid environment (block 510). For example, the device may receive state data, actions, and rewards associated with a network of RL agents monitoring a microgrid environment, as described above. In some implementations, the state data includes data identifying one or more of a wildfire risk index for the microgrid environment, a wildfire risk index for a geographical area adjacent to the microgrid environment, emergency power coverage for the microgrid environment, a connection status associated with the microgrid environment, an operational mode of the microgrid environment, a power demand forecast for the microgrid environment, or a state of charge of each of one or more batteries associated with the microgrid environment.

In some implementations, the actions include one or more of operating the microgrid environment in a fully grid-connected operational mode, operating the microgrid environment in a partially grid-connected operational mode, operating the microgrid environment in a partially islanded operational mode, or operating the microgrid environment in a fully islanded operational mode. In some implementations, the rewards are determined based on one or more of energy coverage for the microgrid environment, a wildfire risk index for the microgrid environment, emergency power coverage for the microgrid environment, or a state of charge of each of one or more batteries associated with the microgrid environment.

As further shown in Fig. 5, process 500 may include modeling the network of RL agents as a spatiotemporal representation (block 520). For example, the device may model the network of RL agents as a spatiotemporal representation, as described above.

As further shown in Fig. 5, process 500 may include representing interactions of the RL agents as edge attributes in the spatiotemporal representation (block 530). For example, the device may represent interactions of the RL agents as edge attributes in the spatiotemporal representation, as described above. In some implementations, the interactions of the RL agents include one or more of checking an availability of one of the RL agents, checking a response time associated with one of the RL agents, or determining a power flow and a power capacity associated with the microgrid environment.

As further shown in Fig. 5, process 500 may include determining, based on the edge attributes, transmissibility, connectedness, and communication delay for each of the RL agents in the spatiotemporal representation (block 540). For example, the device may determine, based on the edge attributes, transmissibility, connectedness, and communication delay for each of the RL agents in the spatiotemporal representation, as described above. In some implementations, the transmissibility relates to abilities of the RL agents to transmit information to neighboring RL agents, the connectedness relates to connectivity of nodes in the spatiotemporal representation, and the communication delay relates to time taken to transmit information to or receive information from the RL agents.

As further shown in Fig. 5, process 500 may include determining, based on the transmissibility, the connectedness, and the communication delay, localized clusters of the RL agents in the spatiotemporal representation (block 550). For example, the device may determine, based on the transmissibility, the connectedness, and the communication delay, localized clusters of the RL agents in the spatiotemporal representation, as described above.

As further shown in Fig. 5, process 500 may include processing the localized clusters of the RL agents, with a first machine learning model, to identify consensus master RL agents for the localized clusters of the RL agents (block 560). For example, the device may process the localized clusters of the RL agents, with a first machine learning model, to identify consensus master RL agents for the localized clusters of the RL agents, as described above. In some implementations, the first machine learning model is a multi-criteria consensus machine learning model. In some implementations, processing the localized clusters of the RL agents, with the first machine learning model, to identify the consensus master RL agents includes utilizing the first machine learning model to process the transmissibility, the connectedness, and the communication delay, associated with the localized clusters of the RL agents, to identify the consensus master RL agents.

As further shown in Fig. 5, process 500 may include processing the consensus master RL agents, with a second machine learning model, to identify a final master RL agent for the network of RL agents (block 570). For example, the device may process the consensus master RL agents, with a second machine learning model, to identify a final master RL agent for the network of RL agents, as described above. In some implementations, the second machine learning model is a hybrid consensus machine learning model. In some implementations, the first machine learning model and the second machine learning model form a deep neural network model.

As further shown in Fig. 5, process 500 may include causing the final master RL agent to control the microgrid environment (block 580). For example, the device may cause the final master RL agent to control the microgrid environment, as described above. In some implementations, causing the final master RL agent to control the microgrid environment includes causing the final master RL agent to receive and process new state data, associated with the microgrid environment, to determine new actions; causing the final master RL to implement the new actions in the microgrid environment; and causing the final master RL agent to receive new rewards from the microgrid environment based on the new actions.

In some implementations, process 500 includes monitoring a performance of the final master RL agent in controlling the microgrid environment, and selecting another final master RL agent based on the performance of the final master RL agent. In some implementations, process 500 includes monitoring energy coverage provided by the final master RL agent to the microgrid environment, monitoring average emergency power coverage provided by the final RL agent to the microgrid environment, or monitoring an average reduction in a wildfire risk index provided by the final RL agent to the microgrid environment.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

The foregoing disclosure provides illustration and description but is not intended to be exhaustive or to limit the implementations to the precise form disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, and/or the like, depending on the context.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

In view of the above, the present application discloses aspects and/or embodiments as described in the following itemized list:

    1. A method, comprising:

        receiving, by a device, state data, actions, and rewards associated with a network of reinforcement learning (RL) agents monitoring a microgrid environment;
        modeling, by the device, the network of RL agents as a spatiotemporal representation;
        representing, by the device, interactions of the RL agents as edge attributes in the spatiotemporal representation;
        determining, by the device and based on the edge attributes, transmissibility, connectedness, and communication delay for each of the RL agents in the spatiotemporal representation;
        determining, by the device and based on the transmissibility, the connectedness, and the communication delay, localized clusters of the RL agents in the spatiotemporal representation; processing, by the device, the localized clusters of the RL agents, with a first machine learning model, to identify consensus master RL agents for the localized clusters of the RL agents; processing, by the device, the consensus master RL agents, with a second machine learning model, to identify a final master RL agent for the network of RL agents; and causing, by the device, the final master RL agent to control the microgrid environment.

2. The method of item 1, wherein the state data includes data identifying one or more of:

   a wildfire risk index for the microgrid environment,
   a wildfire risk index for a geographical area adjacent to the microgrid environment,
   emergency power coverage for the microgrid environment,
   a connection status associated with the microgrid environment,
   an operational mode of the microgrid environment,
   a power demand forecast for the microgrid environment, or
   a state of charge of each of one or more batteries associated with the microgrid environment.

3. The method of item 1, wherein the actions include one or more of:

   operating the microgrid environment in a fully grid-connected operational mode,
   operating the microgrid environment in a partially grid-connected operational mode,
   operating the microgrid environment in a partially islanded operational mode, or
   operating the microgrid environment in a fully islanded operational mode.

4. The method of item 1, wherein the rewards are determined based on one or more of:

   energy coverage for the microgrid environment,
   a wildfire risk index for the microgrid environment,
   emergency power coverage for the microgrid environment, or
   a state of charge of each of one or more batteries associated with the microgrid environment.

5. The method of item 1, wherein causing the final master RL agent to control the microgrid environment comprises:

causing the final master RL agent to receive and process new state data, associated with the microgrid environment, to determine new actions; causing the final master RL to implement the new actions in the microgrid environment; and causing the final master RL agent to receive new rewards from the microgrid environment based on the new actions.

6. The method of item 1, wherein the interactions of the RL agents include one or more of:

   checking an availability of one of the RL agents,
   checking a response time associated with one of the RL agents, or
   determining a power flow and a power capacity associated with the microgrid environment.

7. The method of item 1, wherein the transmissibility relates to abilities of the RL agents to transmit information to neighboring RL agents, the connectedness relates to connectivity of nodes in the spatiotemporal representation, and the communication delay relates to time taken to transmit information to or receive information from the RL agents.

8. A device, comprising one or more memories; and one or more processors, coupled to the one or more memories, configured to:

   receive state data, actions, and rewards associated with a network of reinforcement learning (RL) agents monitoring a microgrid environment;
   model the network of RL agents as a spatiotemporal representation;
   represent interactions of the RL agents as edge attributes in the spatiotemporal representation;
   determine, based on the edge attributes, transmissibility, connectedness, and communication delay for each of the RL agents in the spatiotemporal representation,

      wherein the transmissibility relates to abilities of the RL agents to transmit information to neighboring RL agents,
      wherein the connectedness relates to connectivity of nodes in the spatiotemporal representation, and
      wherein the communication delay relates to time taken to transmit information to or receive information from the RL agents;

   determine, based on the transmissibility, the connectedness, and the communication delay, localized clusters of the RL agents in the spatiotemporal representation;
   process the localized clusters of the RL agents, with a first machine learning model, to identify consensus master RL agents for the localized clusters of the RL agents;
process the consensus master RL agents, with a second machine learning model, to identify a final master RL agent for the network of RL agents; and
cause the final master RL agent to control the microgrid environment.

9. The device of item 7, wherein the first machine learning model is a multi-criteria consensus machine learning model.

10. The device of item 7, wherein the one or more processors, to process the localized clusters of the RL agents, with the first machine learning model, to identify the consensus
master RL agents, are configured to:
utilize the first machine learning model to process the transmissibility, the connectedness, and the communication delay, associated with the localized clusters of the RL agents, to identify the consensus master RL agents.

11. The device of item 7, wherein the second machine learning model is a hybrid consensus machine learning model.

12. The device of item 7, wherein the first machine learning model and the second machine learning model form a deep neural network model.

13. The device of item 7, wherein the one or more processors are further configured to:

monitor a performance of the final master RL agent in controlling the microgrid environment; and
select another final master RL agent based on the performance of the final master RL agent.

14. The device of item 7, wherein the one or more processors are further configured to one or more of:

monitor energy coverage provided by the final master RL agent to the microgrid environment;
monitor average emergency power coverage provided by the final RL agent to the microgrid environment; or
monitor an average reduction in a wildfire risk index provided by the final RL agent to the microgrid environment.

15. A non-transitory computer-readable medium storing a set of instructions, the set of instructions comprising:
one or more instructions that, when executed by one or more processors of a device, cause the device to:

receive state data, actions, and rewards associated with a network of reinforcement learning (RL) agents monitoring a microgrid environment,
wherein the state data includes data identifying one or more of:

a wildfire risk index for the microgrid environment,
a wildfire risk index for a geographical area adjacent to the microgrid environment,
emergency power coverage for the microgrid environment,
a connection status associated with the microgrid environment,
an operational mode of the microgrid environment,
a power demand forecast for the microgrid environment, or
a state of charge of each of one or more batteries associated with the microgrid environment;

model the network of RL agents as a spatiotemporal representation;
represent interactions of the RL agents as edge attributes in the spatiotemporal representation;
determine, based on the edge attributes, transmissibility, connectedness, and communication delay for each of the RL agents in the spatiotemporal representation;
determine, based on the transmissibility, the connectedness, and the communication delay, localized clusters of the RL agents in the spatiotemporal representation;
process the localized clusters of the RL agents, with a first machine learning model, to identify consensus master RL agents for the localized clusters of the RL agents;
process the consensus master RL agents, with a second machine learning model, to identify a final master RL agent for the network of RL agents; and
cause the final master RL agent to control the microgrid environment.

16. The non-transitory computer-readable medium of item 12, wherein the one or more instructions, that cause the device to cause the final master RL agent to control the microgrid environment, cause the device to:

cause the final master RL agent to receive and process new state data, associated with the microgrid environment, to determine new actions;
cause the final master RL to implement the new actions in the microgrid environment; and

cause the final master RL agent to receive new rewards from the microgrid environment based on the new actions.

17. The non-transitory computer-readable medium of item 12, wherein the one or more instructions, that cause the device to process the localized clusters of the RL agents, with the first machine learning model, to identify the consensus master RL agents, cause the device to:

utilize the first machine learning model to process the transmissibility, the connectedness, and the communication delay, associated with the localized clusters of the RL agents, to identify the consensus master RL agents.

18. The non-transitory computer-readable medium of item 12, wherein the first machine learning model and the second machine learning model form a deep neural network model.

19. The non-transitory computer-readable medium of item 12, wherein the one or more instructions further cause the device to:

monitor a performance of the final master RL agent in controlling the microgrid environment; and

select another final master RL agent based on the performance of the final master RL agent.

20. The non-transitory computer-readable medium of item 12, wherein the one or more instructions further cause the device to one or more of:

monitor energy coverage provided by the final master RL agent to the microgrid environment;

monitor average emergency power coverage provided by the final RL agent to the microgrid environment; or

monitor an average reduction in a wildfire risk index provided by the final RL agent to the microgrid environment.

## Claims

1. A method, comprising:

receiving, by a device, state data, actions, and rewards associated with a network of reinforcement learning (RL) agents monitoring a microgrid environment;

modeling, by the device, the network of RL agents as a spatiotemporal representation;

representing, by the device, interactions of the RL agents as edge attributes in the spatiotemporal representation;

determining, by the device and based on the edge attributes, transmissibility, connectedness, and communication delay for each of the RL agents in the spatiotemporal representation;

determining, by the device and based on the transmissibility, the connectedness, and the communication delay, localized clusters of the RL agents in the spatiotemporal representation;

processing, by the device, the localized clusters of the RL agents, with a first machine learning model, to identify consensus master RL agents for the localized clusters of the RL agents;

processing, by the device, the consensus master RL agents, with a second machine learning model, to identify a final master RL agent for the network of RL agents; and

causing, by the device, the final master RL agent to control the microgrid environment.

2. The method of claim 1, wherein the state data includes data identifying one or more of:

a wildfire risk index for the microgrid environment,

a wildfire risk index for a geographical area adjacent to the microgrid environment,

emergency power coverage for the microgrid environment,

a connection status associated with the microgrid environment,

an operational mode of the microgrid environment,

a power demand forecast for the microgrid environment, or

a state of charge of each of one or more batteries associated with the microgrid environment.

3. The method of any one of the preceding claims, wherein the actions include one or more of:

operating the microgrid environment in a fully grid-connected operational mode,

operating the microgrid environment in a partially grid-connected operational mode,

operating the microgrid environment in a partially islanded operational mode, or

operating the microgrid environment in a fully islanded operational mode, and/or

wherein the rewards are determined based on one or more of:

energy coverage for the microgrid environment,

a wildfire risk index for the microgrid environment,

emergency power coverage for the microgrid environment, or

a state of charge of each of one or more batteries associated with the microgrid environment.

4. The method of any one of the preceding claims, wherein causing the final master RL agent to control the microgrid environment comprises:

causing the final master RL agent to receive and process new state data, associated with the microgrid environment, to determine new actions;
causing the final master RL to implement the new actions in the microgrid environment; and
causing the final master RL agent to receive new rewards from the microgrid environment based on the new actions.

5. The method of any one of the preceding claims, wherein the interactions of the RL agents include one or more of:

checking an availability of one of the RL agents,
checking a response time associated with one of the RL agents, or
determining a power flow and a power capacity associated with the microgrid environment.

6. The method of any one of the preceding claims, wherein the transmissibility relates to abilities of the RL agents to transmit information to neighboring RL agents, the connectedness relates to connectivity of nodes in the spatiotemporal representation, and the communication delay relates to time taken to transmit information to or receive information from the RL agents.

7. A device, comprising:

one or more memories; and
one or more processors, coupled to the one or more memories, configured to:

receive state data, actions, and rewards associated with a network of reinforcement learning (RL) agents monitoring a microgrid environment;
model the network of RL agents as a spatiotemporal representation;
represent interactions of the RL agents as edge attributes in the spatiotemporal representation;
determine, based on the edge attributes, transmissibility, connectedness, and communication delay for each of the RL agents in the spatiotemporal representation,

wherein the transmissibility relates to abilities of the RL agents to transmit information to neighboring RL agents,
wherein the connectedness relates to connectivity of nodes in the spatiotemporal representation, and
wherein the communication delay relates to time taken to transmit information to or receive information from the RL agents;

determine, based on the transmissibility, the connectedness, and the communication delay, localized clusters of the RL agents in the spatiotemporal representation;
process the localized clusters of the RL agents, with a first machine learning model, to identify consensus master RL agents for the localized clusters of the RL agents;
process the consensus master RL agents, with a second machine learning model, to identify a final master RL agent for the network of RL agents; and
cause the final master RL agent to control the microgrid environment.

8. The device of claim 7, wherein the first machine learning model is a multi-criteria consensus machine learning model, and/or wherein the second machine learning model is a hybrid consensus machine learning model, and/or wherein the first machine learning model and the second machine learning model form a deep neural network model.

9. The device of any one of claims 7 or 8, wherein the one or more processors, to process the localized clusters of the RL agents, with the first machine learning model, to identify the consensus master RL agents, are configured to:
utilize the first machine learning model to process the transmissibility, the connectedness, and the communication delay, associated with the localized clusters of the RL agents, to identify the consensus master RL agents.

10. The device of any one of claims 7-9, wherein the one or more processors are further configured to:

monitor a performance of the final master RL agent in controlling the microgrid environment; and
select another final master RL agent based on the performance of the final master RL agent.

11. The device of any one of claims 7-10, wherein the one or more processors are further configured to one or more of:

monitor energy coverage provided by the final master RL agent to the microgrid environment; monitor average emergency power coverage provided by the final RL agent to the microgrid environment; or

monitor an average reduction in a wildfire risk index provided by the final RL agent to the microgrid environment.

12. A non-transitory computer-readable medium storing a set of instructions, the set of instructions comprising:

one or more instructions that, when executed by one or more processors of a device, cause the device to:

receive state data, actions, and rewards associated with a network of reinforcement learning (RL) agents monitoring a microgrid environment,
wherein the state data includes data identifying one or more of:

a wildfire risk index for the microgrid environment,
a wildfire risk index for a geographical area adjacent to the microgrid environment,
emergency power coverage for the microgrid environment,
a connection status associated with the microgrid environment,
an operational mode of the microgrid environment,
a power demand forecast for the microgrid environment, or
a state of charge of each of one or more batteries associated with the microgrid environment;

model the network of RL agents as a spatiotemporal representation;
represent interactions of the RL agents as edge attributes in the spatiotemporal representation;
determine, based on the edge attributes, transmissibility, connectedness, and communication delay for each of the RL agents in the spatiotemporal representation;
determine, based on the transmissibility, the connectedness, and the communication delay, localized clusters of the RL agents in the spatiotemporal representation;
process the localized clusters of the RL agents, with a first machine learning model, to identify consensus master RL agents for the localized clusters of the RL agents;
process the consensus master RL agents, with a second machine learning model, to identify a final master RL agent for the network of RL agents; and
cause the final master RL agent to control the microgrid environment.

13. The non-transitory computer-readable medium of claim 12, wherein the one or more instructions, that cause the device to cause the final master RL agent to control the microgrid environment, cause the device to:

cause the final master RL agent to receive and process new state data, associated with the microgrid environment, to determine new actions;
cause the final master RL to implement the new actions in the microgrid environment; and
cause the final master RL agent to receive new rewards from the microgrid environment based on the new actions.

14. The non-transitory computer-readable medium of any one of claims 12 or 13, wherein the one or more instructions, that cause the device to process the localized clusters of the RL agents, with the first machine learning model, to identify the consensus master RL agents, cause the device to:

utilize the first machine learning model to process the transmissibility, the connectedness, and the communication delay, associated with the localized clusters of the RL agents, to identify the consensus master RL agents, and/or
wherein the first machine learning model and the second machine learning model form a deep neural network model.

15. The non-transitory computer-readable medium of any one of claims 12-14, wherein the one or more instructions further cause the device to:

monitor a performance of the final master RL agent in controlling the microgrid environment; and
select another final master RL agent based on the performance of the final master RL agent, and/or wherein the one or more instructions further cause the device to one or more of:

monitor energy coverage provided by the final master RL agent to the microgrid environment;
monitor average emergency power coverage provided by the final RL agent to the microgrid environment; or
monitor an average reduction in a wildfire risk index provided by the final RL agent to the microgrid environment.

Microgrid environment with an RL agent network

FIG. 1A

EP 4 258 172 A1

**FIG. 1B**

**105**
Model an RL agent network, associated with state data, actions, and rewards of a microgrid environment, as a spatiotemporal representation

100

RL system

Model RL agent network

RL agent network

Spatio-temporal representation

RL2

RL3

RL1

RL5

RL6

RL4

RL7 (disconnected)

**FIG. 1C**

EP 4 258 172 A1

EP 4 258 172 A1

100 —→

Create
edge
attributes

RL
system

Spatio-
temporal
representation

**110**
Represent RL agent interactions as edge attributes in the
spatiotemporal representation

Spatio-
temporal
representation
with edges

Edge attributes

RL2
RL3
RL1
RL6
RL5
RL4

# FIG. 1D

100

RL
system

Determine
features of
edge
attributes

115
Determine, based on the edge attributes, transmissibility,
connectedness, and communication delay for each of the RL
agents in the spatiotemporal representation

Transmissibility

Connectedness

Communication
delay

Spatio-
temporal
representation
with edges

**FIG. 1E**

100 →

120
Determine, based on the transmissibility, the connectedness, and the communication delay, localized clusters of RL agents in the spatiotemporal representation

RL system

Determine localized clusters

Localized clusters

Spatio-temporal representation with edges

Transmissibility

Connectedness

Communication delay

Cluster A

RL2 RL3 RL1

Cluster B

RL3 RL1 RL5

Cluster C

RL1 RL5 RL4

Cluster D

RL3 RL6 RL5

**FIG. 1F**

EP 4 258 172 A1

**FIG. 1G**

100

Consensus master A

Consensus master B

Consensus master C

Consensus master D

Second machine learning model

Hybrid consensus for the localized clusters

RL system

Second machine learning model

**130**
Process the consensus master RL agents, with a second machine learning model, to identify a final master RL agent for the RL agent network

Final master RL agent

**135**
Cause the final master RL agent to control the microgrid environment and monitor performance of the final master RL agent

Consensus master A

Consensus master C

Consensus master B

Consensus master D

Microgrid environment

# FIG. 1H

**FIG. 2**

**FIG. 3**

**FIG. 4**

```
┌─────────────────────────────────────┐         ┌─────────────────────────────────────┐
│ Receive state data, actions, and    │         │ Process the localized clusters of   │
│ rewards associated with a network   │  510    │ the RL agents, with a first machine │  560
│ of RL agents monitoring a microgrid │         │ learning model, to identify         │
│ environment                         │         │ consensus master RL agents for the  │
└─────────────────────────────────────┘         │ localized clusters of the RL agents │
                  │                              └─────────────────────────────────────┘
                  ▼                                               │
┌─────────────────────────────────────┐                          ▼
│ Model the network of RL agents into │  520    ┌─────────────────────────────────────┐
│ a spatiotemporal representation     │         │ Process the consensus master RL     │
└─────────────────────────────────────┘         │ agents, with a second machine       │  570
                  │                              │ learning model, to identify a       │
                  ▼                              │ final master RL agent for the       │
┌─────────────────────────────────────┐         │ network of RL agents                │
│ Represent interactions of the RL    │  530    └─────────────────────────────────────┘
│ agents as edge attributes in the    │                          │
│ spatiotemporal representation       │                          ▼
└─────────────────────────────────────┘         ┌─────────────────────────────────────┐
                  │                              │ Cause the final master RL agent to  │  580
                  ▼                              │ control the microgrid environment   │
┌─────────────────────────────────────┐         └─────────────────────────────────────┘
│ Determine, based on the edge        │
│ attributes, transmissibility,       │  540
│ connectedness, and communication    │
│ delay for each of the RL agents in  │
│ the spatiotemporal representation   │
└─────────────────────────────────────┘
                  │
                  ▼
┌─────────────────────────────────────┐
│ Determine, based on the             │
│ transmissibility, the connectedness,│  550
│ and the communication delay,        │
│ localized clusters of the RL agents │
│ in the spatiotemporal representation│
└─────────────────────────────────────┘
```

**FIG. 5**

EP 4 258 172 A1

Europäisches
Patentamt

European
Patent Office

Office européen
des brevets

## EUROPEAN SEARCH REPORT

Application Number

EP 22 19 7605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG QIANZHI ET AL: "Multi-Agent Safe Policy Learning for Power Management of Networked Microgrids", IEEE TRANSACTIONS ON SMART GRID, [Online] vol. 12, no. 2, 26 February 2021 (2021-02-26), pages 1048-1062, XP093044255, USA ISSN: 1949-3053, DOI: 10.1109/TSG.2020.3034827 Retrieved from the Internet: URL:https://ieeexplore.ieee.org/stampPDF/g etPDF.jsp?tp=&arnumber=9244070&ref=aHR0cHM 6Ly9zY2hvbGFyLmdvb2dsZS5jb20v> [retrieved on 2023-05-04] * the whole document * | 1-15 | INV. G06N3/045 G06N3/092 G06N5/043 |
|  |  |  | TECHNICAL FIELDS SEARCHED (IPC) |
|  |  |  | G06N |

The present search report has been drawn up for all claims

| Place of search | Date of completion of the search | Examiner |
|---|---|---|
| The Hague | 4 May 2023 | Ntarlagiannis, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)